# EUROPEAN PATENT SPECIFICATION

(11) **EP 4 566 757 B1**
(45) Date of publication and mention of the grant of the patent: **08.07.2026**
(21) Application number: 24215224.7
(22) Date of filing: 25.11.2024
(51) Int. Cl.: B25B 11/00, B25B 1/24, B25B 1/02, B25B 1/04, B23Q 3/06, B23Q 3/00, B23Q 1/01, B23Q 1/03

(54) **MACHINE FOR PROCESSING WORKPIECES AND ASSOCIATED METHOD**
BEARBEITUNGSMASCHINE FÜR WERKSTÜCKE UND ZUGEHÖRIGES VERFAHREN
MACHINE D'USINAGE DE PIECES DE TRAVAUX EN PROCEDE ASSOCIÉ

(30) Priority: 07.12.2023 IT 202300026295
(43) Date of publication of application: 11.06.2025
(73) Proprietor: SCM Group S.p.A., 47921 Rimini (RN) (IT)
(72) Inventor: MARTELLA, Marco, 47921 RIMINI (RN) (IT)
(74) Representative: Tiburzi, Andrea

(56) References cited:
- DE-A1- 4 303 239

## Description

The present invention relates to a machine for processing workpieces, such as wooden panels or similar, and comprises an anchoring device for fixing a spoilboard on the work plane of the machine.

More specifically, the invention concerns a machine that comprises an anchoring device attachable to the machine for processing workpieces and designed to engage and/or disengage with the spoilboard, facilitating its fixation and/or removal from the work plane.

Additionally, the present invention includes a method for operating a machine for processing wooden workpieces or similar.

### Background Art

Work centers for processing wood are well-known and include a work plane where wooden workpieces, or similar materials such as wood fibers, plastics, or fiberglass, can be positioned and fixed. These work centers may also include a movable gantry (or carriage) relative to the work plane, on which an operator unit equipped with appropriate processing tools is installed.

The movable gantry grants the operator unit the necessary degrees of freedom for translating along different axes, enabling it to process the workpieces through cutting and/or milling. Specifically, the operator unit may include one or more processing heads. The processing head can switch from "nesting" operation to milling operation.

The workpieces are processed by placing them on a supporting panel known as the "spoilboard," which is laid on the work plane of the machine.

The spoilboard is typically made of breathable MDF (Medium-Density Fiberboard) that comprises a plurality of small holes.

A vacuum condition can be generated below the spoilboard to secure the workpiece in place. During the processing phases, the spoilboard may be inadvertently scored, shaped, or otherwise modified, therefore, in some occasion, it necessitates a replacement.

In any case, to perform the workpiece processing, the spoilboard must be rigidly fixed to the work plane. This fixation is typically carried out manually by an operator using screws and/or bolts.

Consequently, proper fixation depends on the operator's skill and experience. Moreover, manual fixation is slow and inefficient, potentially causing delays in processing.

It is therefore desirable to automate the spoilboard fixation process so as to achieve a faster and more efficient fixation. DE 43 03 239 A discloses the preamble of claim 1.

### Objective of the Invention

The objective of the present invention is to overcome the aforementioned disadvantages by providing a machine for processing workpieces that allows for the automated fixing and/or unlocking of a spoilboard on the work plane, in a fast and efficient way.

It is therefore an object of the present invention a machine for processing workpieces as claimed in claim 1 and a method for operating a machine for processing workpieces as claimed in claim 12.

Additional preferred embodiments are described in the dependent claims.

### List of Attached Figures

The present invention will now be described, for illustrative but non-limiting purposes, according to a preferred embodiment, with specific reference to the attached figures, in which:
Figure 1 shows a perspective view of a machine for processing workpieces according to an embodiment of the present invention;
Figure 2 shows a cross-section in the YZ plane of the machine for processing workpieces shown in Figure 1;
Figure 3 shows a perspective view of a spoilboard comprising a cavity for its fixation on the work plane, according to an embodiment of the present invention;
Figure 4 shows a cross-section in the YZ plane of the spoilboard shown in Figure 3;
Figure 5 shows a perspective view of an anchoring device according to an embodiment of the present invention;
Figure 6 shows a detailed cross-section in the YZ plane of the machine for processing workpieces shown in Figure 1, with the anchoring device shown in Figure 5 engaged with the spoilboard shown in Figure 3;
Figure 7 shows a perspective view of an anchoring device in proximity of a portion of the spoilboard, according to another embodiment of the present invention;
Figure 8 shows a perspective view of a fixation system comprising a plurality of anchoring devices, according to an embodiment of the present invention;
Figure 9 shows a block diagram of a method for fixing at least one anchoring device to the spoilboard, according to an embodiment of the present invention;
Figure 10 shows a block diagram of a method for disengaging at least one anchoring device from the spoilboard, according to an embodiment of the present invention;
Figure 11 shows a block diagram of a computer-implemented method for generating an alarm signal indicating that the spoilboard needs replacement, according to an embodiment of the present invention;
Figures 12A-12J show detailed YZ plane views of the fixation system shown in Figure 8 during the stages of loading, locking, unlocking, and removing the spoilboard using the anchoring device shown in Figure 5.

### Detailed Description of the Invention

In the various figures, similar parts are indicated with the same reference numbers.

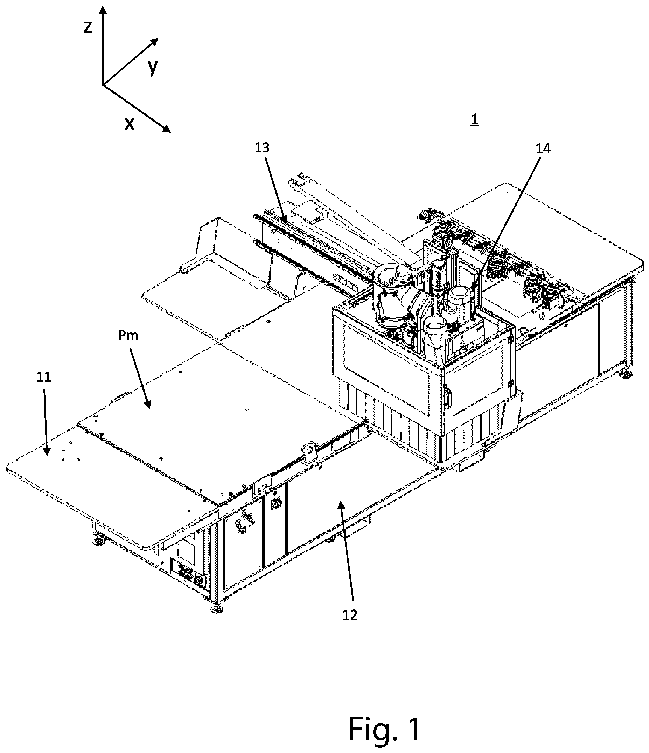

Referring to Figure 1, a perspective view of a machine 1 for processing workpieces P is shown. These workpieces may be made of, for example, wood, plastic, or other materials.

The machine 1 comprises a base 12 and a work plane 11 arranged on the base 12. The work plane 11 is intended to support a spoilboard Pm, which in turn supports the workpieces P during processing.

The machine 1 may further include a gantry 13 that is movable above the work plane 11 in the direction of a first axis X and a group 14 movable along the gantry 13 in the direction of a second axis Y, perpendicular to the first axis X, and a third axis Z, perpendicular to both the first axis X and second axis Y.

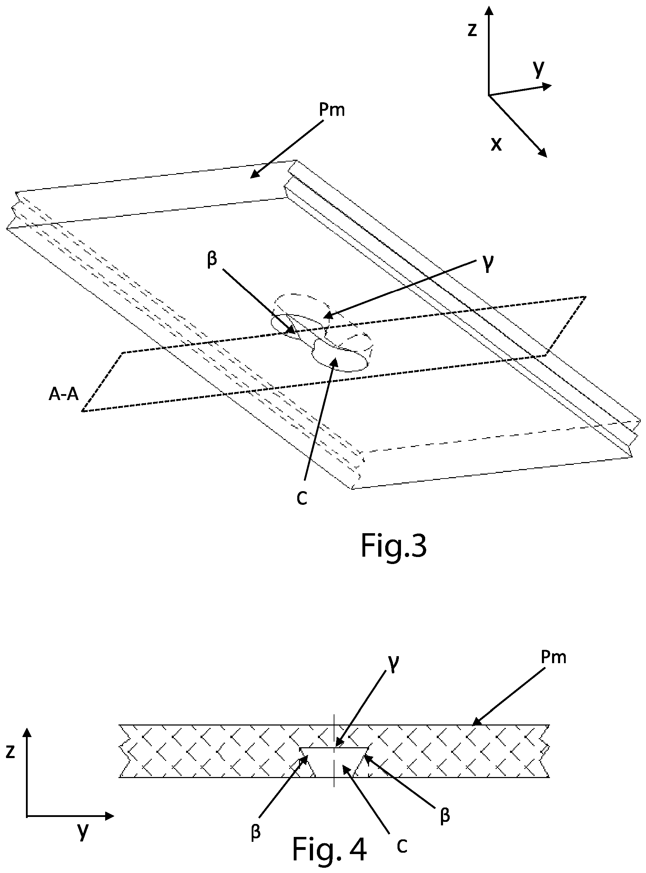

The spoilboard Pm comprises at least one cavity C, as illustrated in Figure 3. This cavity C facilitates the fixation of the spoilboard Pm on the work plane 11, as described below.

The cavity C may have an undercut configuration and comprises a bottom surface γ and at least one locking wall β, such as a lateral wall. The cavity C is formed between the locking walls β and the bottom surface γ.

Figure 4 shows a cross-section in the YZ plane of the spoilboard Pm depicted in Figure 3, where a cavity C is visible. This cavity allows for the insertion of a dowel or pin to secure the spoilboard Pm to the work plane 11.

The cavity C is formed inside the spoilboard Pm and can have an arbitrary shape, such as circular, rectangular, oval, or irregular shape.

In Figure 4, the locking walls β form an acute angle with the plane of the spoilboard Pm, giving the cavity C a profile in the YZ plane that is trapezoidal or dovetail-shaped. This creates an interlocking feature for the dowel or pin.

A dovetail cavity C may be created using a dovetail cutter, for example, by inserting the cutter into one portion of the spoilboard Pm, advancing it through the spoilboard Pm, and then removing it at another different portion of the panel. The cavity C will include a central trapezoidal section, wherein the bottom surface γ is wider than the opposite base (the opening), facing the inside of the spoilboard Pm, resulting in an undercut configuration. Thus, the dovetail undercut has a trapezoidal cross-section of the lateral surfaces or locking walls β, which is complementary to the shape of the dowel.

However, it is evident that the shape of the cavity C should not be limited to an undercut configuration but can include any shape with at least one locking wall β, such as a stepped design.

The spoilboard Pm may include a receiving surface Γ designed to support a workpiece P to be processed. This receiving surface Γ is positioned in correspondence with the cavity C of the spoilboard Pm.

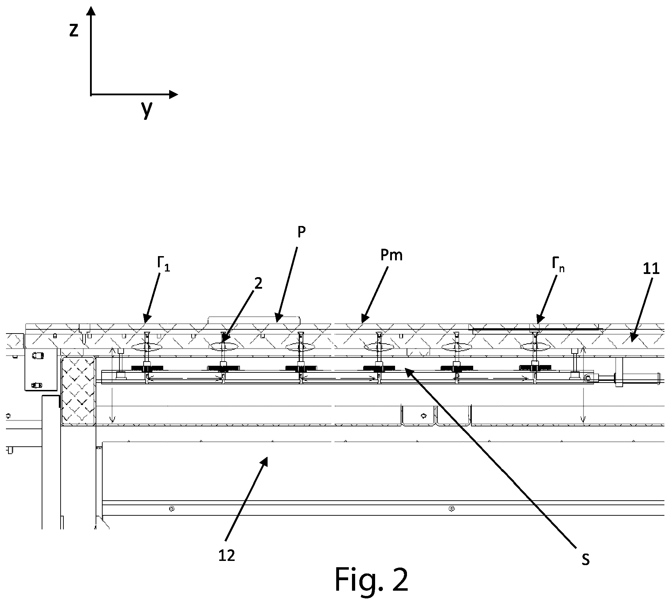

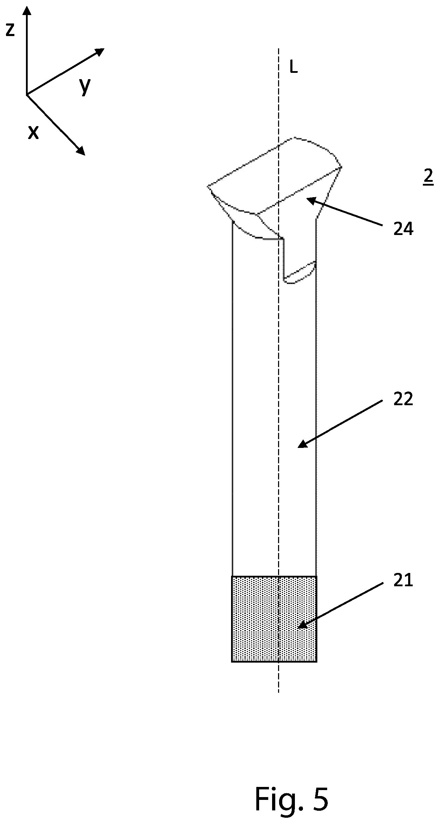

The machine 1 described with reference to Figure 1 further includes at least one anchoring device 2 for fixing/securing the spoilboard Pm on the work plane 11, as illustrated in Figure 2. The anchoring device 2 is detailed in Figure 5 and comprises:
- a support body 21 that can be attached to the work plane 11 or the base 12 of the machine 1; and
- an anchoring body 22, such as an elongated element, mounted at one end of the support body 21. The anchoring body 22 includes an anchoring head 24, or dowel, positioned at one end of the anchoring body 22 for insertion into the cavity C.

The anchoring head 24 may include one or more protrusions or lateral surfaces shaped to engage with at least one portion of the cavity C of complementary shape.

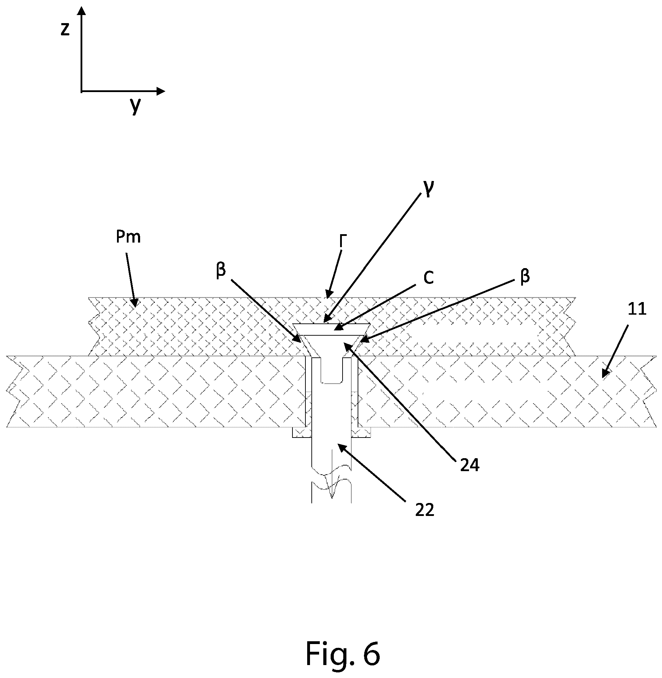

For example, as shown in Figure 6, when the cavity C is undercut the spoilboard Pm, the anchoring head 24 may have a profile in the YZ plane that is dovetail-shaped. This allows it to engage with the locking walls β of the cavity C through the lateral surfaces of the head 24. By exploiting the taper of the anchoring head 24, the anchoring device 2 can secure the spoilboard Pm to the work plane 11, restricting both longitudinal movement along the axis L and lateral movement of the spoilboard Pm.

The anchoring head 24 may also have a different profile in an orthogonal plane (XZ plane), such as two parallel faces, allowing for easier disengagement from the cavity C.

For example, the anchoring head 24 may have a conical shape flattened on two parallel lateral faces, the lateral faces comprise a trapezoidal section to facilitate its insertion into the cavity C.

In another example, the parallel faces of the anchoring head 24 may include inclined planes instead of truncated cone surfaces.

The anchoring body 22 can move between an access position D1, wherein the anchoring head 24 can be inserted into or withdrawn from the cavity C, and a stop position D2, wherein at least a portion of the surface of the anchoring head 24 engages with at least one locking wall β of the cavity C, thereby securing the spoilboard Pm to the work plane 11.

The positioning of the anchoring body 22 may occur through rotational mechanisms within the machine 1. These mechanisms allow the anchoring body 22 to rotate around its axis L between the access position D1 and the stop position D2, for example, via a 90° rotational movement.

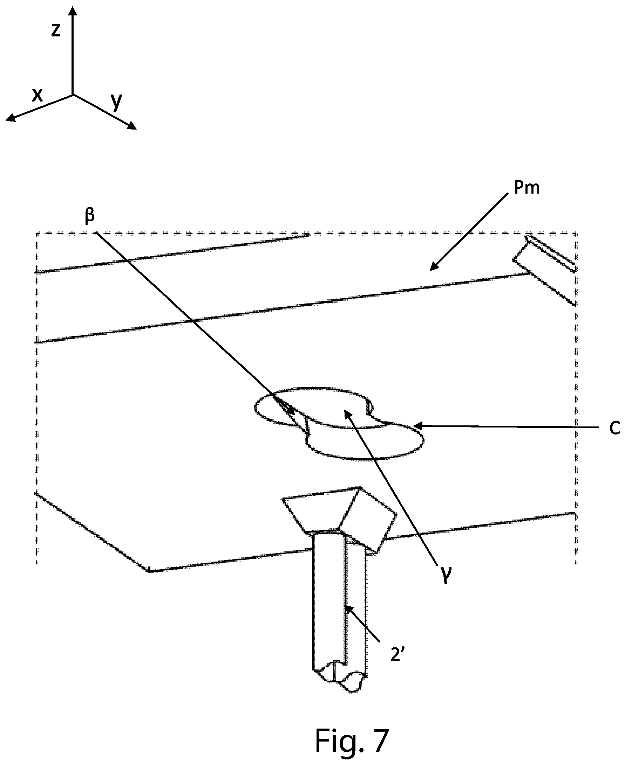

Figure 7 illustrates a perspective view of an alternative anchoring device 2' positioned in proximity the spoilboard Pm, according to another embodiment object of the present invention.

In particular, the anchoring head 24 or dowel of the anchoring device 2' has a profile in the YZ plane shaped as an isosceles trapezoid, allowing it to engage with the locking walls β of the cavity C through the inclined lateral walls of the head 24.

In this configuration, rotation of the anchoring device 2' and thus of the anchoring head 24 is not required. Instead, the anchoring head 24 can be inserted into an access section of the cavity C and subsequently advanced into a stop position, in locking section of the cavity C that includes at least one locking wall β. Thus, the machine 1 may include sliding mechanisms to move the anchoring body 22 and/or the spoilboard Pm along the work plane 11, positioning the anchoring body 22 in the access position D1 or the stop position D2

The machine 1 may include lifting mechanisms to:
- raise the anchoring body 22 to insert the anchoring head 24 into the corresponding cavity C when the anchoring body is in the access position D1 or disengage the anchoring head 24 from the locking wall β of the corresponding cavity C when the anchoring body is in the stop position D2; or
- lower the anchoring body 22 to engage the anchoring head 24 with at least one locking wall β of the corresponding cavity C when the anchoring body is in the stop position D2, or extract the anchoring head 24 from the corresponding cavity C when the anchoring body is in the access position D1.

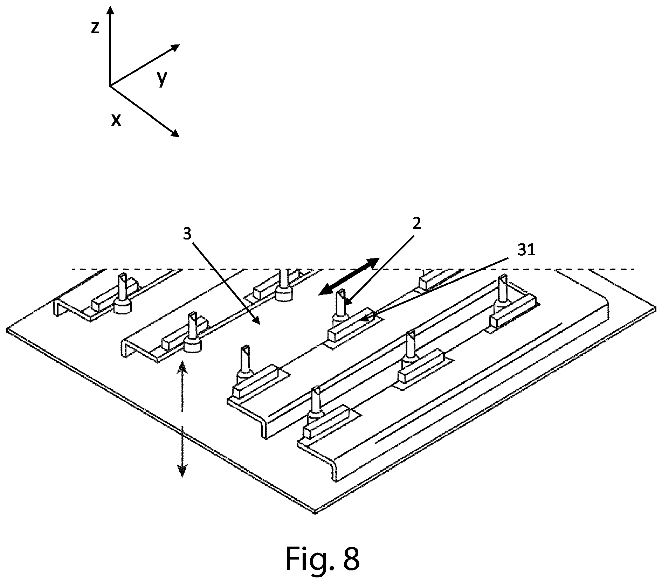

Referring now to Figure 8, a perspective view is shown of a fixation system S of the machine 1 that allows simultaneous movement of a plurality of anchoring devices 2.

The fixation system S for the spoilboard Pm includes actuating/drive plane 3 functionally coupled to the plurality of anchoring devices 2 for coordinated movement.

Specifically, the actuating plane 3 is movable between a first position P1, in which the plurality of anchoring devices 2 is simultaneously rotated into the access position D1, and a second position P2, in which the plurality of anchoring devices 2 is simultaneously rotated into the stop position D2.

The fixation system S enables simultaneous rotation of the anchoring body 22 of each anchoring device 2 around its respective axis of rotation L between the access position D1 and the stop position D2.

As shown in Figure 8, the actuating plane 3 may include a plurality of racks 31 attached to the plane 3 to simultaneously move the toothed wheels 26 of each anchoring device 2. Each toothed wheel 26 has a central axis coinciding with the axis of rotation L of the anchoring body 22.

In other embodiments, the anchoring body 22 of the anchoring device 2 may be rotated using a lever instead of the toothed wheel 26 and corresponding rack 31.

The actuating plane 3 may also be movable along the Z-axis between a raised position, wherein each of the elongated anchoring bodies 22 is simultaneously raised from the actuating plane 3, and a lowered position, wherein each of the elongated anchoring bodies 22 is simultaneously lowered from the actuating plane 3.

For example, the actuating plane 3 may include a shaped metal sheet capable of sliding along the Z-axis using ball-bearing guides mounted on the base 12 and actuated by an actuator fixed at one end to the base 12 and at the opposite end to the metal sheet.

The machine 1 for processing workpieces P may include a logical control or processing unit responsible for coordinating the actions necessary to execute one or more machine instructions for implementing one or more methods described later and one or more sensors for detecting the thickness of the spoilboard Pm in correspondence to the cavity C, such as the thickness of the receiving surface Γ of the workpiece P to be processed.

This logical control unit allows continuous or periodic monitoring the wear of the spoilboard Pm and signals when it needs to be replaced with a new spoilboard.

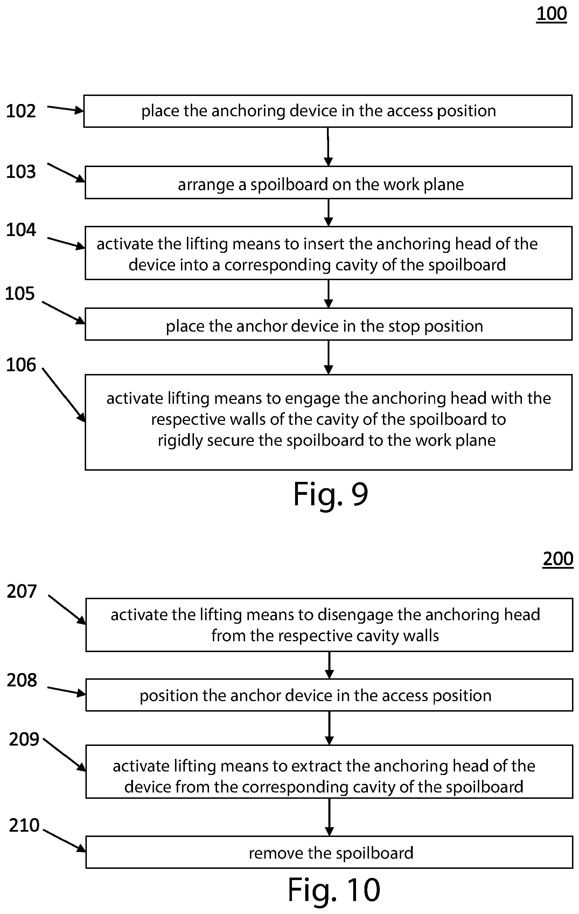

Referring now to Figures 9-11, block diagrams are shown of respective methods 100, 200, 300 for operating a machine 1 for processing workpieces P.

In particular, Figure 9 illustrates a method 100 for engaging an anchoring device 2 with the respective locking walls β of the cavity C in the spoilboard Pm. This method 100 allows for securely fixing a spoilboard Pm onto the work plane 11 of a machine 1 for processing workpieces P.

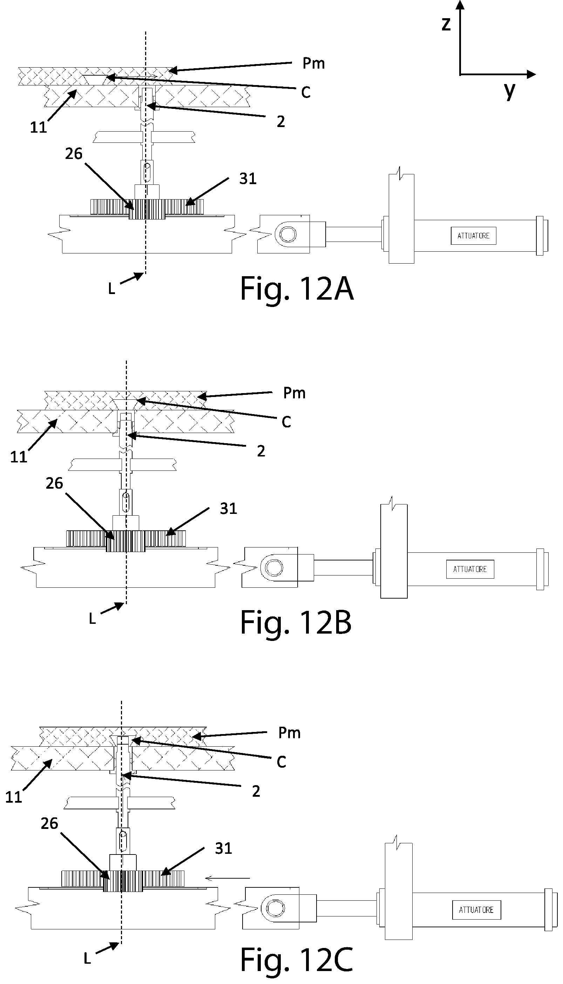

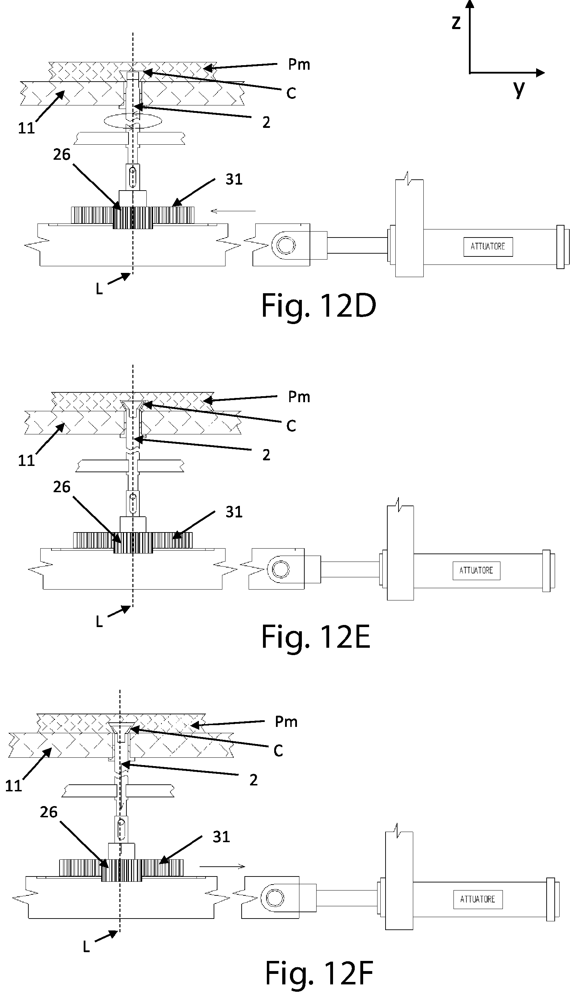

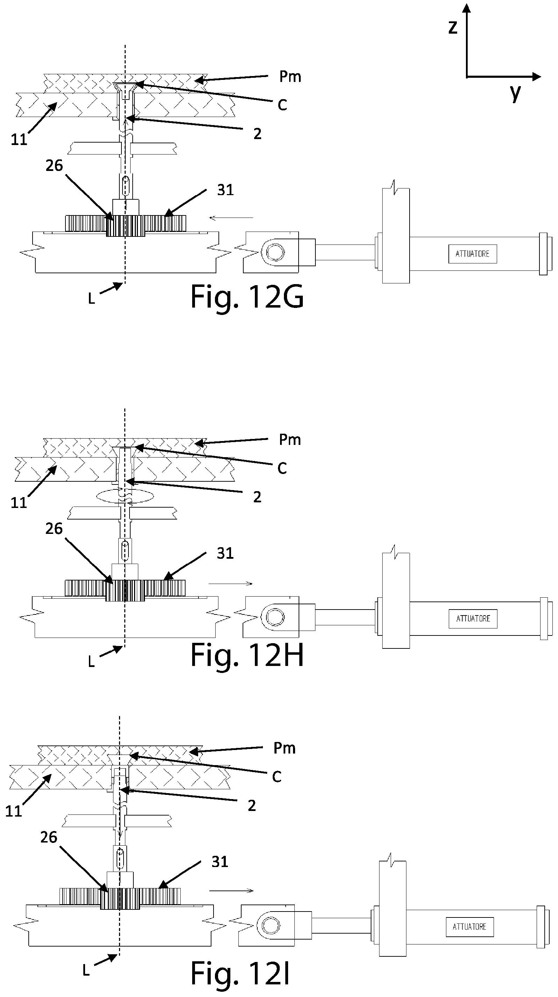

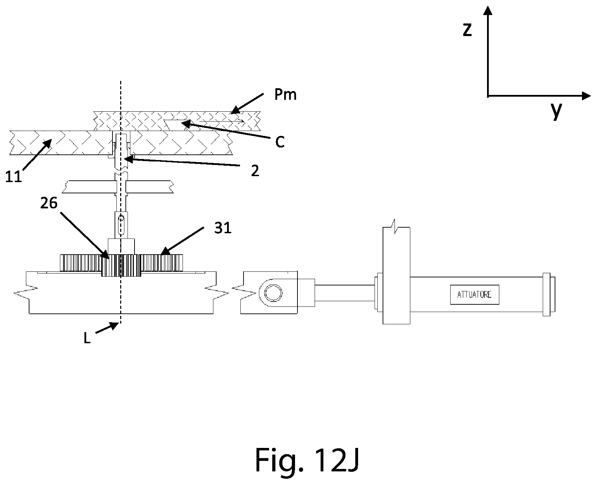

The method 100 comprises an initial phase 102 in which at least one anchoring device 2 is positioned in the access position D1, as shown, for example, in Figure 12A.

In this position D1, the anchoring head is retracted within the work plane 11, allowing for the free movement of the spoilboard Pm on the work plane 11.

Subsequently, in step 103, the spoilboard Pm is placed/loaded onto the work plane 11, aligning its corresponding cavity C with the anchoring head 24 of the respective anchoring device 2, as shown, for instance, in Figure 12B. In this manner the spoilboard Pm is disposed in its operational location. The anchoring head 24, which is in the access position D1, can then be inserted into the corresponding cavity C of the spoilboard Pm.

In step 104, the lifting mechanisms are activated to raise the anchoring body 22 of the anchoring device 2 aligned with the corresponding cavity C, inserting the respective anchoring head 24 into the cavity C, as shown in Figure 12C.

The anchoring device 2 is thus lifted, coming out from the work plane 11, so that the anchoring head 24 is inserted into the cavity C to a height sufficient to avoid contact with the internal surfaces of the cavity C, such as the locking wall β.

In step 105, the anchoring device 2 is positioned in the stop position D2.

For example, as shown in Figure 12D, the anchoring device 2 is rotated to position at least one inclined lateral surface of the anchoring head 24 in correspondence with the locking wall β of the complementary-shaped cavity C.

Finally, in step 106, the lifting mechanisms are activated to lower the anchoring device 2, engaging the anchoring head 24 with at least one locking wall β of the corresponding cavity C, thereby securing the spoilboard Pm to the work plane 11, as shown, for instance, in Figure 12E.

Referring now to Figure 10, a block diagram illustrates a method 200 for disengaging an anchoring device 2 from the respective locking walls β of the cavity C in the spoilboard Pm.

This method 200 allows for the removal of an anchoring device 2 from the spoilboard Pm, by reversing the steps of method 100, to replace it with a new spoilboard Pm, for example, when the current spoilboard Pm has reached the end of its useful life.

The method 200 comprise the initial step 207, in which the lifting mechanisms are activated to raise the anchoring body 22 of the anchoring device 2, disengaging the anchoring head 24 from the locking wall β of the cavity C, as shown, for instance, in Figure 12G.

In step 208, the anchoring device 2 is moved into the access position D1, wherein the anchoring head 24 can be withdrawn from the cavity C.

For instance, in Figure 12H, the anchoring device 2 is rotated to misalign the inclined lateral surfaces of the anchoring head 24 from the corresponding locking walls β in the cavity C of complementary shape, enabling the subsequent extraction of the anchoring device 2. Specifically, the rotation aligns the two parallel planes of the anchoring head 24 with the locking walls β, facilitating the extraction of the anchoring device 2.

In step 209, the lifting mechanisms are activated to lower the anchoring body 22, thereby extracting the anchoring head 24 from the corresponding cavity C. Consequently, the anchoring device is retracted into the work plane 11, allowing the spoilboard Pm to be moved freely on the work plane 11. At this point, the spoilboard Pm is detached from the work plane 11.

Finally, in step 210, the spoilboard Pm can be removed, for example, by sliding it in the unloading direction, enabling its replacement.

Although in Figures 12A-J the anchoring device 2 is moved to the stop position D2 or access position D1 by rotating the anchoring body 22 about its axis of rotation L, it is clear that the invention is not limited to this specific type of movement. For instance, the anchoring device 2 may also be positioned in the stop position D2 or access position D1 by sliding the anchoring body 22 and/or the spoilboard Pm along the work plane 11, without requiring rotation.

The methods described above with reference to Figures 9 and 10 can be executed in sequence. For example, during an initial phase, method 100 may be carried out to engage an anchoring device 2 with the respective locking walls β of the cavity C in the spoilboard Pm. Subsequently, for instance, after a processing phase of the workpiece P, method 200 may be executed to disengage the anchoring device 2 from the respective locking walls β of the cavity C in the spoilboard Pm.

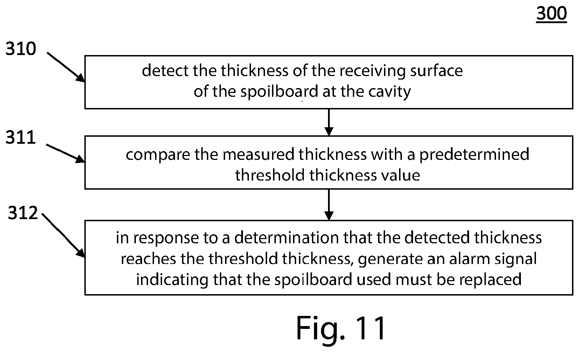

Referring now to Figure 11, a block diagram is shown of a method 300 implemented via computer to generate an alarm signal indicating that the spoilboard Pm in use needs to be replaced.

The method 300 can be carried out during the processing of workpieces P to monitor, either in real time or at predefined intervals, the state of wear of the spoilboard Pm.

The method 300 comprises, step 310, in which the thickness of the receiving surface Γ in correspondence with the cavity C of the spoilboard Pm is detected using one or more sensors.

These sensors may include inductive distance sensors, mechanically actuated sensors, and/or photoelectric sensors.

In step 311, the logical control unit compares the detected thickness with a predefined threshold value.

In response to determining that the thickness has reached the threshold value, In step 312, an alarm signal is generated indicating that the spoilboard Pm must be replaced with a new spoilboard.

The spoilboard Pm can be removed by executing the method 200 shown in Figure 10, and the new spoilboard can be loaded by executing the method 100 shown in Figure 9.

Advantageously, the machine for processing workpieces and the associated method, object of the invention, allows for a reduction in the time required for fixing and/or unlocking the spoilboard on the work plane, eliminating the need for screws or fixing bolts, which would otherwise require long application and removal times.

A second advantage is given by the fact that the machine for processing workpieces and the associated method, the object of the invention, allow for monitoring the wear state of the spoilboard surface and determining whether the spoilboard must be replaced with a new panel. This allows for optimization of spoilboard replacement times, avoiding possible premature replacement, that is when the spoilboard is still usable, thereby containing costs and processing times, or delayed replacement, that is when the wear is such that it compromises the functionality of the spoilboard and, consequently, the quality of the processing.

The present invention has been described illustratively, but not restrictively, according to its preferred embodiments. It is understood that variations and/or modifications may be made by those skilled in the art without departing from the scope of protection as defined by the attached claims.

## Claims

1. A machine (1) for processing workpieces (P), comprising:
a work plane (11) for supporting a spoilboard (Pm);
a base (12), on which said work plane (11) is placed;
said spoilboard (Pm) has at least one cavity (C) and in that said machine (1) comprises at least one anchoring device (2, 2') for fixing said spoilboard (Pm) on said work plane (11), said at least one anchoring device (2, 2') comprising:
a support body (21) which can be secured to said machine (1);
**characterized in that**
an anchoring body (22), mounted in correspondence with one end of said support body (21), and comprising an anchoring head (24) arranged at one end of said anchoring body (22) for insertion into said cavity (C) having at least one locking wall (β), said anchoring body (22) being positionable between an access position (D1), wherein the anchoring head (24) can be inserted or withdrawn from the cavity (C), and a stop position (D2), wherein at least a portion of the surface of said anchoring head (24) can be engaged with said at least one locking wall (β) in said cavity (C) so as to secure the spoilboard (Pm) to said work plane (11).

2. The machine (1) of the preceding claim, wherein said cavity (C) is undercut and comprises a bottom surface (γ), said cavity (C) being formed between said at least one locking wall (β) and said bottom surface (γ).

3. The machine (1) of claim 1 or 2, wherein said anchoring head (24) comprises one or more protuberances having a shape that allows to lock said anchoring head (24) in said complementary cavity (C).

4. The machine (1) of any one of the preceding claims, comprising lifting means configured to:
raise said anchoring body so as to insert said anchoring head (24) in said corresponding cavity (C) when said anchoring body is in the access position (D1), or disengage said anchoring head (24) from said at least one locking wall (β) in said corresponding cavity (C) when said anchoring body is in a stop position (D2); or
lower said anchoring body (22) so as to engage said anchoring head (24) with said at least one locking wall (β) in said corresponding cavity (C) when said anchoring body is in a stop position (D2), or extracting said anchoring head (24) from said corresponding cavity (C) when said anchoring body is in the access position (D1).

5. The machine (1) of any one of the preceding claims, wherein said machine (1) comprises:
a plurality of anchor devices (2); and
a securing system (S) for a spoilboard (Pm), comprising an actuating plane (3) functionally coupled to said plurality of anchoring devices (2), said actuating plane (3) being movable between a first position (P1), wherein said plurality of anchor devices (2) is concurrently arranged in an access position (D1), and a second position (P2), in which said plurality of anchoring devices (2) is concurrently arranged in the stop position (D2).

6. The machine (1) of the preceding claim, wherein said support body (21) of each of said plurality of anchoring devices (2) comprises a toothed wheel (26) whose central axis is coincident with the axis of rotation (L) of said respective anchoring body (22), and wherein said actuating plane (3) comprises a plurality of racks (31) being constrained to said actuating plane (3) for simultaneously moving said toothed wheels (26) of said respective plurality of anchoring devices (2) when said actuating plane (3) is moved between said first position (P1) and said second position (P2).

7. The machine (1) of claim 5 or 6 wherein said actuating plane (3) is movable between a raised position, wherein each of said elongated anchoring bodies (22) of said plurality of anchoring devices (2) is simultaneously raised from said actuating plane (3), and a lowered position, wherein each of said elongated anchoring bodies (22) of said plurality of anchoring devices (2) is simultaneously lowered by said actuating plane (3).

8. The machine (1) of any one of the preceding claims, comprising rotation means to rotate said anchoring body (22) about its axis of rotation (L) between said access position (D1) and said stop position (D2).

9. The machine (1) of any one of claims 1-7, comprising sliding means adapted to slide said anchoring body (22) and/or said spoilboard (Pm) along said work plane (11), to position said anchoring body (22) in said access position (D1) or in said stop position (D2).

10. The machine (1) of any one of the preceding claims, comprising:
a gantry (13) movable above said work plane (11) in the direction of a first axis X; and
a group (14) movable along said gantry (13) in the direction of a second axis Y, perpendicular to said first axis X, and a third axis Z perpendicular to said first axis X and said second axis Y.

11. The machine (1) of any one of the preceding claims, comprising:
one or more sensors configured to detect (310) a thickness of a receiving surface (Γ) of said spoilboard (Pm) at said cavity (C), said receiving surface (Γ) being adapted to receive a workpiece (P) to be processed; and
a control logic unit configured to:
compare (311) said detected thickness with a predetermined threshold thickness value; and
in response to a determination that said thickness reaches said threshold thickness, generating (312) an alarm signal indicative that said spoilboard (Pm) is to be replaced with another spoilboard.

12. The method (100, 200, 300) for operating a machine (1) for processing workpieces (P) according to any one of the preceding claims, said method comprising:
placing (102) said at least one anchoring device (2, 2') in said access position (D1);
arranging (103) said spoilboard (Pm) on said work plane (11) aligning a corresponding cavity (C) with said anchoring head (24) of a respective anchoring device (2, 2');
activating (104) lifting means to lift said anchoring body (22) of at least one anchoring device (2, 2') in such a way as to insert said respective anchoring head (24) in said corresponding cavity (C);
placing (105) said at least one anchor device (2, 2') in a stop position (D2); and
activating (104) said lifting means to lower said anchoring body (22) of at least one anchoring device (2, 2') thus engaging said anchoring head (24) with said at least one locking wall (β) in said corresponding cavity (C).

13. The method (200) of claim 12 including:
activating (207) lifting means to lift said anchoring body (22) of at least one anchoring device (2, 2') disengaging said anchoring head (24) from said at least one locking wall (β) in said corresponding cavity (C);
positioning (208) said at least one anchor device (2, 2') in an access position (D1);
activating (209) lifting means to lower said anchoring body (22) of at least one anchoring device (2, 2') thus extracting said anchoring head (24) from said corresponding cavity (C); and
removing (210) said spoilboard (Pm).

14. The method (100, 200) of claim 12 or 13, wherein positioning (105, 208) said anchor device (21, 2') in the stop position (D2) or in the access position (D1) comprises:
sliding said anchoring body (22) and/or said spoilboard (Pm) along said work plane (11) for positioning said anchoring body (22) in said access position (D1) or in said stopping position (D2); or
rotating said anchoring body (22) of at least one anchor device (2) about its axis of rotation (L) between said access position (D1) and said stop position (D2).

15. The method (300) of any one of claims 12-14, comprising:
detecting (310) using one or more sensors a thickness of a receiving surface (Γ) of said spoilboard (Pm) at said cavity (C), said receiving surface (Γ) being adapted to receive a workpiece (P) to be processed;
comparing (311), by means of a logic control unit, said thickness with a predetermined threshold thickness value; and
in response to a determination that said thickness reaches said threshold thickness, generating (312) an alarm signal indicative that said spoilboard (Pm) is to be replaced with another spoilboard.

## Patentansprüche

1. Bearbeitungsmaschine (1) für Werkstücke (P), umfassend:
eine Arbeitsfläche (11) zum Aufnehmen einer Abtragsplatte (Pm);
eine Basis (12), auf der die Arbeitsfläche (11) aufliegt;
wobei die Abtragsplatte (Pm) mindestens einen Hohlraum (C) aufweist und wobei die Maschine (1) mindestens eine Verankerungsvorrichtung (2, 2') zum Befestigen der Abtragsplatte (Pm) auf der Arbeitsebene (11) umfasst, wobei die mindestens eine Verankerungsvorrichtung (2, 2') Folgendes umfasst:
einem Stützkörper (21), der an der Maschine (1) befestigt werden kann;
**dadurch gekennzeichnet, dass**
einen Verankerungskörper (22), der an einem Ende des genannten Stützkörpers (21) angebracht ist, und einen Verankerungskopf (24) aufweisend, der an einem Ende des Verankerungskörpers (22) zum Einführen in den Hohlraum (C) mit mindestens einer Verriegelungswand (β) angeordnet ist, wobei der Verankerungskörper (22) zwischen einer Zugangsposition (D1), in der der Verankerungskopf (24) in den Hohlraum (C) eingeführt oder aus diesem herausgezogen werden kann, und einer Anschlagposition (D2), in der zumindest ein Teil der Oberfläche des Verankerungskopfes (24) mit der mindestens einen Verriegelungswand (β) in dem Hohlraum (C) in Eingriff gebracht werden kann, um die Abdeckschicht (Pm) an der Arbeitsebene (11) zu befestigen.

2. Maschine (1) nach dem vorstehenden Anspruch, wobei der Hohlraum (C) hinterschnitten ist und eine Bodenfläche (γ) aufweist, wobei der Hohlraum (C) zwischen der mindestens einen Verriegelungswand (β) und der Bodenfläche (γ) ausgebildet ist.

3. Maschine (1) nach Anspruch 1 oder 2, wobei der Verankerungskopf (24) einen oder mehrere Vorsprünge aufweist, deren Form es ermöglicht, den Verankerungskopf (24) in dem komplementären Hohlraum (C) zu arretieren.

4. Maschine (1) nach einem der vorstehenden Ansprüche, umfassend eine Hubeinrichtung, die so ausgelegt ist, dass sie:
den Verankerungskörper so anzuheben, dass der Verankerungskopf (24) in den entsprechenden Hohlraum (C) eingeführt wird, wenn sich der Verankerungskörper in der Zugangsposition (D1) befindet, oder den Verankerungskopf (24) von der mindestens einen Verriegelungswand (β) in dem entsprechenden Hohlraum (C) zu lösen, wenn sich der Verankerungskörper in einer Anschlagposition (D2) befindet; oder
den Verankerungskörper (22) absenken, sodass der Verankerungskopf (24) mit der mindestens einen Verriegelungswand (β) in dem entsprechenden Hohlraum (C) in Eingriff kommt, wenn sich der Verankerungskörper in einer Anschlagposition (D2) befindet, oder den Verankerungskopf (24) aus dem entsprechenden Hohlraum (C) herausziehen, wenn sich der Verankerungskörper in der Zugangsposition (D1) befindet.

5. Maschine (1) nach einem der vorstehenden Ansprüche, wobei die Maschine (1) umfasst:
eine Vielzahl von Verankerungsvorrichtungen (2); und
ein Befestigungssystem (S) für eine Unterlage (Pm), umfassend eine Betätigungsebene (3), die funktional mit der Vielzahl von Verankerungsvorrichtungen (2) funktionsmäßig gekoppelt ist, wobei die Betätigungsebene (3) zwischen einer ersten Position (P1), in der die Vielzahl von Verankerungsvorrichtungen (2) gleichzeitig in einer Zugangsposition (D1) angeordnet ist, und einer zweiten Position (P2), in der die Vielzahl von Verankerungsvorrichtungen (2) gleichzeitig in der Anschlagposition (D2) angeordnet ist, bewegbar ist.

6. Maschine (1) nach dem vorstehenden Anspruch, wobei der Stützkörper (21) jeder der mehreren Verankerungsvorrichtungen (2) ein Zahnrad (26) umfasst, dessen Mittelachse mit der Drehachse (L) des jeweiligen Verankerungskörpers (22) zusammenfällt, und wobei die Betätigungsebene (3) eine Vielzahl von Zahnstangen (31) umfasst, die an der Betätigungsebene (3) befestigt sind, um die Zahnräder (26) der jeweiligen Vielzahl von Verankerungsvorrichtungen (2) gleichzeitig zu bewegen, wenn die Betätigungsebene (3) zwischen der ersten Position (P1) und der zweiten Position (P2) bewegt wird.

7. Maschine (1) nach Anspruch 5 oder 6, wobei die Betätigungsebene (3) zwischen einer angehobenen Position, in der jeder der länglichen Verankerungskörper (22) der mehreren Verankerungsvorrichtungen (2) gleichzeitig von der Betätigungsebene (3) angehoben wird, und einer abgesenkten Position, in der jeder der länglichen Verankerungskörper (22) der Vielzahl von Verankerungsvorrichtungen (2) gleichzeitig durch die Betätigungsebene (3) abgesenkt wird.

8. Maschine (1) nach einem der vorstehenden Ansprüche, die eine Dreheinrichtung umfasst, um den Verankerungskörper (22) um seine Drehachse (L) zwischen der Zugangsposition (D1) und der Anschlagposition (D2) zu drehen.

9. Maschine (1) nach einem der Ansprüche 1-7, mit einer Gleiteinrichtung, die dazu ausgelegt ist, den Verankerungskörper (22) und/oder die Abstreifplatte (Pm) entlang der Arbeitsebene (11) zu verschieben, um den Verankerungskörper (22) in die Zugangsposition (D1) oder in die Anschlagposition (D2) zu bringen.

10. Maschine (1) nach einem der vorstehenden Ansprüche, umfassend:
ein Portal (13), das über der genannten Arbeitsebene (11) in Richtung einer ersten Achse X bewegbar ist; und
eine entlang des Portals (13) in Richtung einer zweiten Achse Y, die senkrecht zur ersten Achse X verläuft, bewegliche Gruppe (14) sowie eine dritte Achse Z, die senkrecht zur ersten Achse X und zur zweiten Achse Y verläuft.

11. Maschine (1) nach einem der vorstehenden Ansprüche, umfassend:
ein oder mehrere Sensoren, die so ausgelegt sind, dass sie (310) die Dicke einer Auflagefläche (Γ) der Aufspannplatte (Pm) an dem Hohlraum (C) erfassen, wobei die Auflagefläche (Γ) dazu ausgelegt ist, ein zu bearbeitendes Werkstück (P) aufzunehmen; und
eine Steuerlogikeinheit, die dazu ausgelegt ist:
die ermittelte Dicke mit einem vorgegebenen Schwellenwert vergleichen (311);
und als Reaktion auf die Feststellung, dass die genannte Dicke die genannte Schwellenwertdicke erreicht, Erzeugen (312) eines Alarmsignals, das anzeigt, dass die genannte Abtragplatte (Pm) durch eine andere Abtragplatte ersetzt werden muss.

12. Verfahren (100, 200, 300) zum Betreiben einer Maschine (1) zur Bearbeitung von Werkstücken (P) gemäß einem der vorstehenden Ansprüche, wobei das Verfahren umfasst:
Anordnen (102) der mindestens einen Verankerungsvorrichtung (2, 2') in der Zugangsposition (D1);
Anordnen (103) der Abtragplatte (Pm) auf der Arbeitsebene (11), wobei ein entsprechender Hohlraum (C) mit dem Verankerungskopf (24) einer jeweiligen Verankerungsvorrichtung (2, 2') ausgerichtet wird;
Aktivieren (104) der Hubvorrichtung, um den Verankerungskörper (22) mindestens einer Verankerungsvorrichtung (2, 2') so anzuheben, dass der jeweilige Verankerungskopf (24) in den entsprechenden Hohlraum (C) eingeführt wird;
Anordnen (105) der mindestens einen Verankerungsvorrichtung (2, 2') in einer Anschlagposition (D2); und
Aktivieren (104) der Hubvorrichtung, um den Verankerungskörper (22) mindestens einer Verankerungsvorrichtung (2, 2') abzusenken, wodurch der Verankerungskopf (24) mit der mindestens einen Verriegelungswand (β) in dem entsprechenden Hohlraum (C) in Eingriff gebracht wird.

13. Verfahren (200) nach Anspruch 12, umfassend:
Aktivieren (207) der Hubvorrichtung, um den Verankerungskörper (22) mindestens einer Verankerungsvorrichtung (2, 2') anzuheben, wodurch der Verankerungskopf (24) von der mindestens einen Verriegelungswand (β) in dem entsprechenden Hohlraum (C) gelöst wird;
Positionierung (208) der mindestens einen Verankerungsvorrichtung (2, 2') in einer Zugangsposition (D1);
Aktivieren (209) der Hubvorrichtung, um den Verankerungskörper (22) mindestens einer Verankerungsvorrichtung (2, 2') abzusenken und dadurch den Verankerungskopf (24) aus dem entsprechenden Hohlraum (C) herauszuziehen; und
Entfernen (210) der Abdeckscheibe (Pm).

14. Verfahren (100, 200) nach Anspruch 12 oder 13, wobei das Positionieren (105, 208) der Verankerungsvorrichtung (21, 2') in der Anschlagposition (D2) oder in der Zugangsposition (D1) Folgendes umfasst:
das Verschieben des Verankerungskörpers (22) und/oder der Abstreifplatte (Pm) entlang der Arbeitsebene (11), um den Verankerungskörper (22) in die Zugangsposition (D1) oder in die Anschlagposition (D2) zu bringen; oder
Drehen des Verankerungskörpers (22) mindestens einer Verankerungsvorrichtung (2) um seine Drehachse (L) zwischen der Zugangsposition (D1) und der Anschlagposition (D2).

15. Verfahren (300) nach einem der Ansprüche 12-14, umfassend:
Erfassen (310) der Dicke einer Auflagefläche (Γ) der Aufspannplatte (Pm) an dem Hohlraum (C) mittels eines oder mehrerer Sensoren, wobei die Auflagefläche (Γ) dazu ausgelegt ist, ein zu bearbeitendes Werkstück (P) aufzunehmen;
Vergleichen (311) dieser Dicke mit einem vorgegebenen Schwellenwert für die Dicke mittels einer Logiksteuereinheit; und
als Reaktion auf die Feststellung, dass die genannte Dicke die genannte Schwellenwertdicke erreicht, Erzeugen (312) eines Alarmsignals, das anzeigt, dass die genannte Abtragplatte (Pm) durch eine andere Abtragplatte ersetzt werden muss.

## Revendications

1. Machine (1) d'usinage de pièces de travaux (P), comprenant:
un plan de travail (11) destiné à supporter une planche de protection (Pm);
une base (12) sur laquelle est posé ledit plan de travail (11);
ladite planche de protection (Pm) comporte au moins une cavité (C) et en ce que ladite machine (1) comprend au moins un dispositif de fixation (2, 2') destiné à fixer ladite planche de protection (Pm) sur ledit plan de travail (11), ledit au moins un dispositif de fixation (2, 2') comprenant:
un corps de support (21) pouvant être fixé à ladite machine (1);
**caractérisée en ce que**
un corps d'ancrage (22), monté en correspondance avec une extrémité dudit corps de support (21), et comprenant une tête d'ancrage (24) disposée à une extrémité dudit corps d'ancrage (22) pour être insérée dans ladite cavité (C) comportant au moins une paroi de verrouillage (β), ledit corps d'ancrage (22) pouvant être positionné entre une position d'accès (D1), dans laquelle la tête d'ancrage (24) peut être insérée ou retirée de la cavité (C), et une position d'arrêt (D2), dans laquelle au moins une partie de la surface de ladite tête d'ancrage (24) peut venir en prise avec ladite au moins une paroi de verrouillage (β) dans ladite cavité (C) de manière à fixer la planche de protection (Pm) audit plan de travail (11).

2. Machine (1) selon la revendication précédente, dans laquelle ladite cavité (C) présente une contre-dépouille et comprend une surface inférieure (γ), ladite cavité (C) étant formée entre ladite au moins une paroi de verrouillage (β) et ladite surface inférieure (γ).

3. Machine (1) selon la revendication 1 ou 2, dans laquelle ladite tête d'ancrage (24) comprend une ou plusieurs saillies dont la forme permet de bloquer ladite tête d'ancrage (24) dans ladite cavité complémentaire (C).

4. Machine (1) selon l'une quelconque des revendications précédentes, comprenant des moyens de levage agencés pour:
soulever ledit corps d'ancrage de manière à insérer ladite tête d'ancrage (24) dans ladite cavité correspondante (C) lorsque ledit corps d'ancrage se trouve en position d'accès (D1), ou dégager ladite tête d'ancrage (24) de ladite au moins une paroi de verrouillage (β) dans ladite cavité correspondante (C) lorsque ledit corps d'ancrage se trouve en position d'arrêt (D2); ou
abaisser ledit corps d'ancrage (22) de manière à ce que ladite tête d'ancrage (24) s'engage avec ladite au moins une paroi de verrouillage (β) dans ladite cavité correspondante (C) lorsque ledit corps d'ancrage se trouve en position de butée (D2), ou extraire ladite tête d'ancrage (24) de ladite cavité correspondante (C) lorsque ledit corps d'ancrage se trouve en position d'accès (D1).

5. Machine (1) selon l'une quelconque des revendications précédentes, **caractérisée en ce que** ladite machine (1) comprend:
une pluralité de dispositifs d'ancrage (2); et
un système de fixation (S) pour une planche de protection (Pm), comprenant un plan d'actionnement (3) couplé fonctionnellement à ladite pluralité de dispositifs d'ancrage (2), ledit plan d'actionnement (3) étant mobile entre une première position (P1), dans laquelle ladite pluralité de dispositifs d'ancrage (2) est simultanément disposée dans une position d'accès (D1), et une deuxième position (P2), dans laquelle ladite pluralité de dispositifs d'ancrage (2) est simultanément disposée dans la position d'arrêt (D2).

6. Machine (1) selon la revendication précédente, dans laquelle ledit corps de support (21) de chacun des dispositifs d'ancrage (2) de ladite pluralité comprend une roue dentée (26) dont l'axe central coïncide avec l'axe de rotation (L) dudit corps d'ancrage (22) respectif, et dans laquelle ledit plan d'actionnement (3) comprend une pluralité de crémaillères (31) fixées audit plan d'actionnement (3) pour déplacer simultanément lesdites roues dentées (26) de ladite pluralité respective de dispositifs d'ancrage (2) lorsque ledit plan d'actionnement (3) est déplacé entre ladite première position (P1) et ladite deuxième position (P2).

7. Machine (1) selon la revendication 5 ou 6, dans laquelle ledit plan d'actionnement (3) est mobile entre une position relevée, dans laquelle chacun desdits corps d'ancrage allongés (22) de ladite pluralité de dispositifs d'ancrage (2) est simultanément relevé dudit plan d'actionnement (3), et une position abaissée, dans laquelle chacun desdits corps d'ancrage allongés (22) de ladite pluralité de dispositifs d'ancrage (2) est simultanément abaissé par ledit plan d'actionnement (3).

8. Machine (1) selon l'une quelconque des revendications précédentes, comprenant des moyens de rotation destinés à faire tourner ledit corps d'ancrage (22) autour de son axe de rotation (L) entre ladite position d'accès (D1) et ladite position d'arrêt (D2).

9. Machine (1) selon l'une quelconque des revendications 1-7, comprenant des moyens de coulissement adaptés pour faire coulisser ledit corps d'ancrage (22) et/ou ladite plaque de protection (Pm) le long dudit plan de travail (11), afin de positionner ledit corps d'ancrage (22) dans ladite position d'accès (D1) ou dans ladite position d'arrêt (D2).

10. Machine (1) selon l'une quelconque des revendications précédentes, comprenant:
un portique (13) pouvant se déplacer au-dessus dudit plan de travail (11) dans la direction d'un premier axe X; et
un ensemble (14) pouvant se déplacer le long dudit portique (13) dans la direction d'un deuxième axe Y, perpendiculaire audit premier axe X, et d'un troisième axe Z, perpendiculaire audit premier axe X et audit deuxième axe Y.

11. Machine (1) selon l'une quelconque des revendications précédentes, comprenant:
un ou plusieurs capteurs configurés pour détecter (310) l'épaisseur d'une surface de réception (Γ) dudit plateau de support (Pm) au niveau de ladite cavité (C), ladite surface de réception (Γ) étant conçue pour recevoir une pièce (P) à traiter; et
une unité logique de commande configurée pour:
comparer (311) ladite épaisseur détectée à une valeur d'épaisseur seuil prédéterminée;
et, en réponse à la constatation que ladite épaisseur atteint ladite épaisseur seuil, générer (312) un signal d'alarme indiquant que ladite plaque de protection (Pm) doit être remplacée par une autre plaque de protection.

12. Procédé (100, 200, 300) de mise en service d'une machine (1) destinée au traitement de pièces (P) selon l'une quelconque des revendications précédentes, ledit procédé comprenant:
le placement (102) dudit au moins un dispositif d'ancrage (2, 2') dans ladite position d'accès (D1);
en positionnant (103) ladite plaque de protection (Pm) sur ledit plan de travail (11) de manière à aligner une cavité correspondante (C) avec ladite tête d'ancrage (24) d'un dispositif d'ancrage respectif (2, 2');
en actionnant (104) des moyens de levage pour soulever ledit corps d'ancrage (22) d'au moins un dispositif d'ancrage (2, 2') de manière à insérer ladite tête d'ancrage (24) correspondante dans ladite cavité (C) correspondante;
en plaçant (105) ledit au moins un dispositif d'ancrage (2, 2') dans une position d'arrêt (D2); et
en actionnant (104) ledit moyen de levage pour abaisser ledit corps d'ancrage (22) d'au moins un dispositif d'ancrage (2, 2'), ce qui permet d'engager ladite tête d'ancrage (24) avec ladite au moins une paroi de verrouillage (β) dans ladite cavité correspondante (C).

13. Procédé (200) selon la revendication 12, comprenant:
en actionnant (207) des moyens de levage pour soulever ledit corps d'ancrage (22) d'au moins un dispositif d'ancrage (2, 2') et en désengageant ladite tête d'ancrage (24) de ladite au moins une paroi de verrouillage (β) dans ladite cavité correspondante (C);
positionner (208) ledit au moins un dispositif d'ancrage (2, 2') dans une position d'accès (D1);
en actionnant (209) des moyens de levage pour abaisser ledit corps d'ancrage (22) d'au moins un dispositif d'ancrage (2, 2'), extrayant ainsi ladite tête d'ancrage (24) de ladite cavité correspondante (C); et
retirer (210) ladite planche de protection (Pm).

14. Procédé (100, 200) selon la revendication 12 ou 13, dans lequel le positionnement (105, 208) dudit dispositif d'ancrage (21, 2') en position d'arrêt (D2) ou en position d'accès (D1) comprend:
en faisant coulisser ledit corps d'ancrage (22) et/ou ladite plaque de protection (Pm) le long dudit plan de travail (11) afin de positionner ledit corps d'ancrage (22) dans ladite position d'accès (D1) ou dans ladite position d'arrêt (D2); ou
faire tourner ledit corps d'ancrage (22) d'au moins un dispositif d'ancrage (2) autour de son axe de rotation (L) entre ladite position d'accès (D1) et ladite position d'arrêt (D2).

15. Procédé (300) selon l'une quelconque des revendications 12-14, comprenant:
détecter (310), à l'aide d'un ou plusieurs capteurs, l'épaisseur d'une surface de réception (r) dudit plateau de support (Pm) au niveau de ladite cavité (C), ladite surface de réception (Γ) étant conçue pour recevoir une pièce (P) à traiter;
en comparant (311), à l'aide d'une unité de commande logique, ladite épaisseur à une valeur seuil d'épaisseur prédéterminée; et
en réponse à la constatation que ladite épaisseur atteint ladite épaisseur seuil, générer (312) un signal d'alarme indiquant que ladite plaque de protection (Pm) doit être remplacée par une autre plaque de protection.
